# NEUE EUROPÄISCHE PATENTSCHRIFT

(11) **EP 1 648 650 B2**
(45) Veröffentlichungstag und Bekanntmachung des Hinweises auf die Entscheidung über den Einspruch: **27.04.2011**
(45) Hinweis auf die Patenterteilung: 15.11.2006
(21) Anmeldenummer: 04741173.1
(22) Anmeldetag: 20.07.2004
(51) Int. Cl.: B23K 26/067

(54) **VERFAHREN UND VORRICHTUNG ZUM LASERBEARBEITEN VON WERKSTÜCKEN**
METHOD AND DEVICE FOR THE LASER MACHINING OF WORKPIECES
PROCEDE ET DISPOSITIF POUR USINER AU LASER DES PIECES

(30) Priorität: 22.07.2003 DE 10333456
(43) Veröffentlichungstag der Anmeldung: 26.04.2006
(73) Patentinhaber: KUKA Systems GmbH, 86165 Augsburg (DE)
(72) Erfinder: RIPPL, Peter, 86163 Augsburg (DE)
(74) Vertreter: Ernicke, Klaus Stefan
(86) Internationale Anmeldenummer: PCT/EP2004/008104
(87) Internationale Veröffentlichungsnummer: WO 2005/009667

(56) Entgegenhaltungen:
- EP-A- 0 631 838
- WO-A-02/02281
- DE-A1- 19 604 205
- US-A- 4 855 565
- PATENT ABSTRACTS OF JAPAN Bd. 04238688, & JP 26 August 1992
- LASER INSTITUTE OF AMERICA: 'Proceedings of International Congress on Applications of Lasers and ElectroOptics, Jacksonville, FL, USA' LASER WELDING ON THE FLY WITH COUPLED AXES SYSTEMS 15 Oktober 2001 - 18 Oktober 2001, Seiten 1179 - 1184

## Beschreibung

Die Erfindung betrifft ein Verfahren und eine Vorrichtung zum Laserbearbeiten von Werkstücken mit den Merkmalen im Oberbegriff der selbstständigen Ansprüche 1 und 13.

Aus der Praxis ist es bekannt, mit einem Laserwerkzeug verschiedene Arten von Werkstückbearbeitung durchzuführen, z.B. Schweißen, Schneiden, Gravieren, Beheizen oder dergleichen. Die Laserwerkzeuge werden mittels mehrachsigen mechanischen Manipulatoren, z.B. Kreuztischen, mehrachsigen Gelenkarmrobotern oder dergleichen relativ zum Werkstück bewegt. Beim Laserschweißen ist es üblich, das Laserwerkzeug mittels eines Andrückelementes in Kontakt und mit gleichbleibendem Abstand zum Werkstück zu führen. Hierbei können Fokussieroptiken mit festen und relativ kurzen Brennweiten eingesetzt werden. Ferner ist in der Praxis das Laser-Remoteschweißen bekannt, bei dem ein Laserwerkzeug mit feststehender und längerer Brennweite von einem mehrachsigen Manipulator in einem größeren Abstand relativ zum Werkstück geführt wird. Beim Remote-Schweißen ist es außerdem bekannt, das Laserwerkzeug mit einer Scannereinrichtung auszustatten, die den Laserstrahl ablenkt und relativ zum Werkstück bewegt.

Bei den vorgenannten Laserbearbeitungen ist die Prozessgeschwindigkeit des Laserstrahls am Werkstück, z.B. die Schweißgeschwindigkeit, begrenzt. Sie liegt bei YAG- oder CO₂-Lasern bei ca. 4 - 6 m/min. Mit Faserlasern oder Scheibenlasern sind höhere Geschwindigkeiten bis momentan ca. 10 m/min erreichbar. Die Versatzgeschwindigkeit, mit der der Manipulator das Laserwerkzeug entlang einer vorgegebenen Bahn bei der Bearbeitung, z.B. beim Laserschweißen, bewegt, entspricht der vorerwähnten Bearbeitungsgeschwindigkeit. Wenn strichweise Bearbeitungsvorgänge stattfinden, z.B. beim Steppnahtschweißen, kann der Manipulator in den Transportphasen zwischen den Schweißvorgängen schneller bewegt werden. Bei den meisten Bearbeitungsvorgängen, z.B. beim Laserschweißen, wird angestrebt, möglichst viele Schweißnähte in möglichst kurzer Zeit zu setzen. Durch die relativ niedrige Schweißgeschwindigkeit sind dem aber Grenzen gesetzt, zumal der Manipulator in den Transportphasen mit seinen Achsen Beschleunigungs- und Bremsvorgänge durchführen muss und dadurch ebenfalls im Geschwindigkeitsniveau begrenzt ist. Zudem führen derartige Beschleunigungs- und Bremsvorgänge zu höheren mechanischen Belastungen des Manipulators.

Ein Verfahren nebst Vorrichtung gemäß Oberbegriff der selbstständigen Ansprüche 1 und 13 ist bekannt aus der Literaturstelle: Proceedings of International Congress of Applications of Lasers and Electro-Optics, Jacksonville, FL, USA: 15/10/2001 - 18/10/2001; Laser Institute of America, 2001, pages 1179-1184 "Laser welding on the fly with coupled axes systems" von A. Klotzbach et.al. Der Laserstrahl wird hier nur von einer Scanneroptic mit Spiegeln abgelenkt.
Es ist Aufgabe der vorliegenden Erfindung, eine andere leistungsfähige Laserbearbeitungstechnik aufzuzeigen.

Die Erfindung löst diese Aufgabe mit den Merkmalen im Verfahrens- und Vorrichtungshauptanspruch.
Die Überlagerung der führenden Versatzbewegung und einer entgegen gerichteten Ausgleichsbewegung des Laserstrahls hat den Vorteil, dass das Gesamt-Geschwindigkeitsniveau des Manipulators erhöht werden kann, ohne dass die zulässige Bearbeitungsgeschwindigkeit am Werkstück überschritten wird. Durch die Leistungssteigerung können mehr Bearbeitungsvorgänge in kürzerer Zeit als bisher durchgeführt werden. Dies hat besonders Vorteile beim Laserschweißen und speziell bei Steppnähten.

Mit der beanspruchten Laserbearbeitungstechnik ist es insbesondere möglich, Karosserieteile mit Steppnähten sehr schnell und mit hoher und einstellbarer Festigkeit bzw. Formstabilität zu fügen und eine Karosserie ähnlich wie ein Kleidungsstück sozusagen zu "nähen". Dies kann sowohl beim Geometrieschweißen geschehen, als auch beim Ausschweißen, wobei beide Schweißvorgänge in der gleichen Station erfolgen und ineinander übergehen können. Die beim Punktschweißen übliche Trennung in Geometrieschweißen oder Heften in einer Framing-Station und anschließendes Respot-Schweißen in Folgestationen ist nicht mehr erforderlich, kann allerdings auf Wunsch trotzdem stattfinden.

Ein weiterer Vorteil ist die Möglichkeit zur Vergleichmäßigung der Versatzbewegungen. Wenn die Versatzgeschwindigkeit ausreichend hoch ist, kann die Versatzbewegung im Wesentlichen kontinuierlich sein, was den Manipulator entlastet. Hierbei sind allerdings in den Transportphasen trotzdem Geschwindigkeitserhöhungen möglich, um die Leistung noch weiter zu steigern.

Die Ausgleichsbewegung wird über eine Schwenkbewegung der Manipulatorhand um eine ihrer Handachsen durchgeführt. Eine solche Bewegung lässt sich schnell durchführen und sehr exakt steuern, wobei diese Handachse bevorzugt eigenständig und unabhängig von der Versatzbewegung der anderen Manipulatorachsen steuerbar ist. Die Bewegung einer Handachsenbewegung und insbesondere einer möglichst weit abtriebseitig liegenden Achse hat den weiteren Vorteil, dass die beteiligten Massen klein gehalten werden können, was eine trägheitsarme Ausgleichsbewegung erlaubt.

Das Laserwerkzeug kann mittels eines Auslegers oder einer anderen geeigneten Technik mit Abstand oder in einer Winkellage zur Manipulatorhand und der für die Ausgleichsbewegung beaufschlagten Handachse montiert sein. Durch die Abstandsvergrößerung genügen kleine Drehwinkel der Handachse, um große Ausgleichsbewegungen und -wege zu erzielen. Durch Veränderung des Abstands kann das Übersetzungs- oder Hebelverhältnis geändert werden. Das Laserwerkzeug kann je nach Art des Auslegers eine kurze und vorzugsweise feste Fokusbrennweite haben. Das hat Vorteile bei der Fokustoleranz und bei der breiten Auswahl an einsetzbaren Lasersystemen. Es ist alternativ möglich, Laseroptiken mit einer langen Fokusbrennweite einzusetzen.

Bei einer Ausgleichsschwenkbewegung wird zu Beginn des Bearbeitungsvorgangs, insbesondere am Anfang der zu setzenden Schweißnaht, der Laserstrahl dem Laserwerkzeug und der Versatzbewegung vorauseilend schräg auf das Werkstück gerichtet. Ein solcher von der normalerweise senkrechten Strahlrichtung abweichender Einstrahlwinkel von z.B. 15° hat Vorteile beim Einstechen des Laserstrahls am Werkstück. Im Verlauf der Ausgleichsbewegung ändert sich die Strahlrichtung über den senkrechten Einfallwinkel bis zu einem schräg rückwärts gerichteten Strahlwinkel, was wiederum Vorteile am Nahtende hat.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Laserbearbeitungsvorrichtung mit einem mehrachsigen Roboter, einem Ausleger und einem Laserwerkzeug an einem Werkstück in Seitenansicht,
- Figur 2:: einen Bewegungsablauf einer Ausgleichsbewegung des Laserwerkzeugs in sieben Schritten A - G,
- Figur 3:: eine Wegedarstellung von Schweißnaht und Ersatzweg,
- Figur 4:: ein Geschwindigkeitsdiagramm für Versatzgeschwindigkeit, Ausgleichsgeschwindigkeit und Schweißgeschwindigkeit,
- Figur 5:: eine Vektordarstellung der überlagerten Geschwindigkeiten,
- Figur 6:: verschiedene Nahtformen,
- Figur 7:: ein Schweißschema an einer Karosserieseitenwand,
- Figur 8:: eine Variante der Laserbearbeitungsvorrichtung mit einem anders ausgerichteten und angeordneten Ausleger in Seitenansicht,
- Figur 9:: eine vergrößerte Detaildarstellung des Auslegers mit dem Laserwerkzeug und
- Figur 10:: eine nicht unter Anspruch 1 und 13 fallende Laserbearbeitungsvornchtung mit einer Scannereinrichtung zur Laserstrahlablenkung.

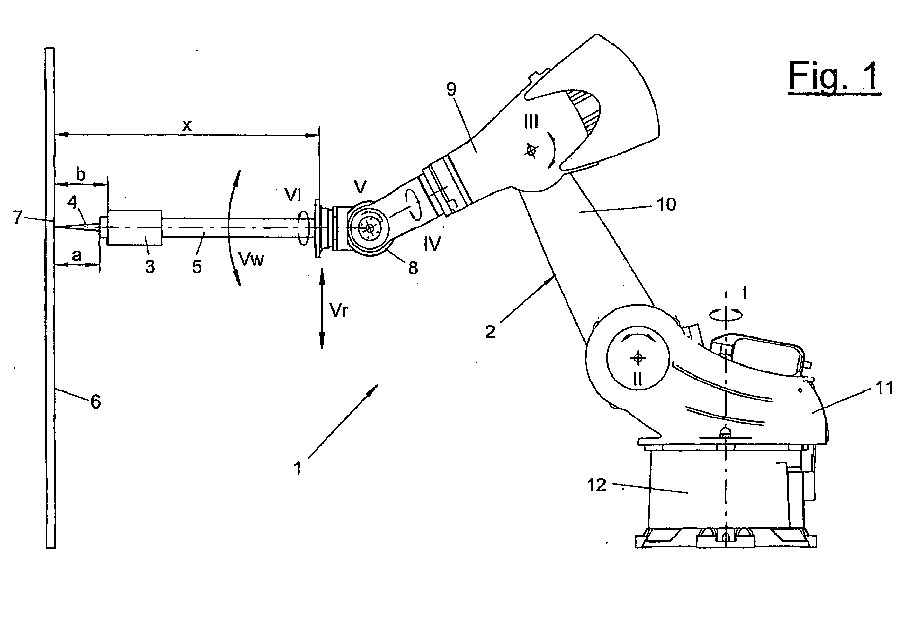

Figur 1, 8 und 10 zeigen eine Laserbearbeitungsvorrichtung (1) in verschiedenen Varianten, die aus mindestens einem mehrachsigen mechanischen Manipulator (2) und einem Laserwerkzeug (3) besteht, welches mindestens einen Laserstrahl (4) auf ein Werkstück (6) emittiert.

Der Manipulator (2) ist vorzugsweise als mindestens sechsachsiger Gelenkarmroboter ausgebildet. Dieser besteht in der gezeigten Ausführungsform aus einem Sockel (12), auf dem um eine erste vertikale Drehachse I eine Konsole (11) drehbar gelagert ist, an der wiederum eine Schwinge (10) um eine horizontale Schwenkachse II schwenkbar gelagert ist. Am oberen Schwingenende ist um eine weitere horizontale Schwenkachse III ein Roboterarm (9) schwenkbar gelagert, an dessen vorderen Ende eine dreiachsige Roboterhand (8) mit drei kreuzenden Handachsen IV, V und VI angebracht ist. Am vorderen Ende hat die Roboterhand (8) einen drehbaren Abtriebsflansch (14), an dem das Laserwerkzeug (3) montiert ist.

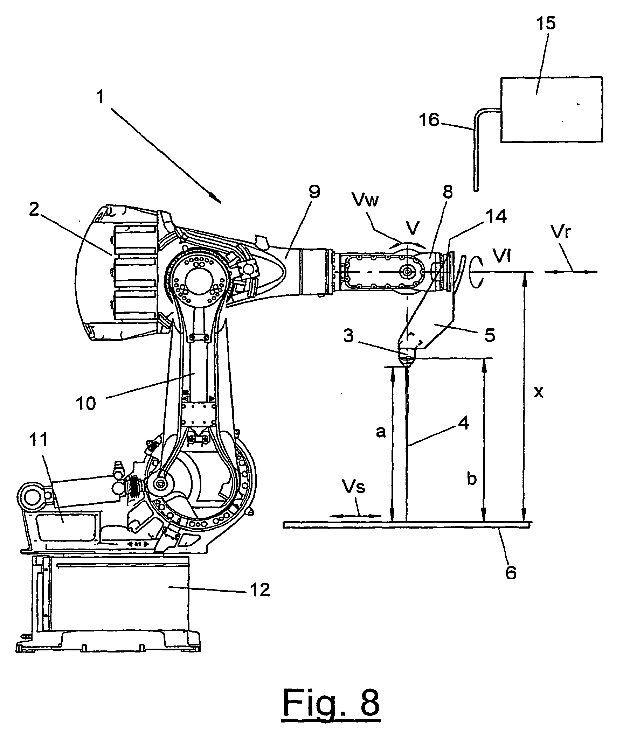

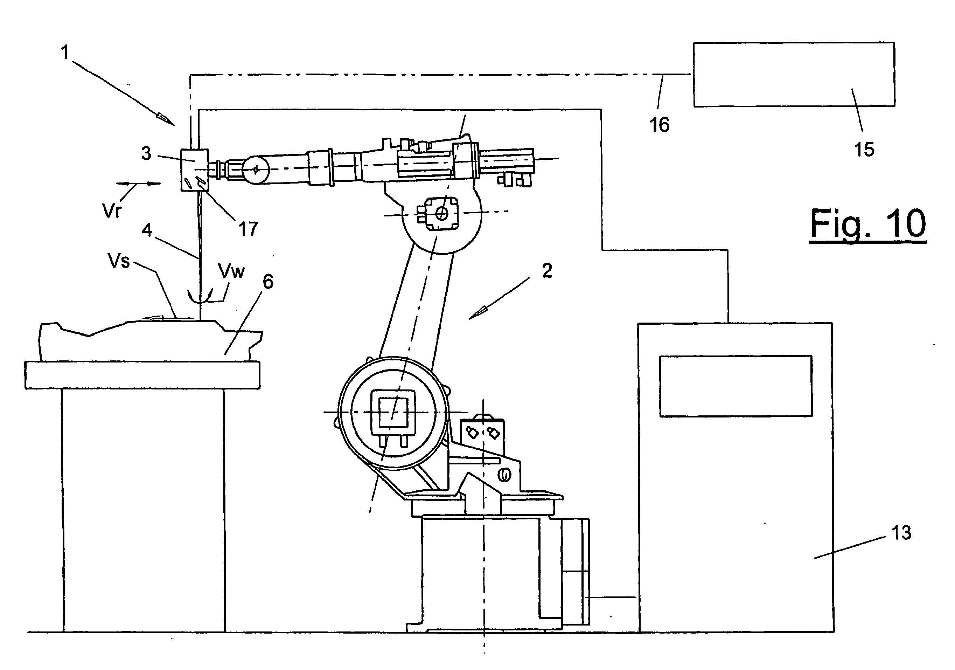

Das Laserwerkzeug (3) ist in den Zeichnungen nur schematisch dargestellt. Es kann von beliebig geeigneter Bauart sein, z.B. ein YAG-Laser, ein CO2-Laser, ein Faserlaser, ein Scheibenlaser oder dergleichen. Die Laserstrahlquelle (15) kann extern angeordnet sein, wobei der Laserstrahl am Laserwerkzeug (3) in geeigneter Weise über eine Leitungsführung (16) mit Spiegeln, Lichtleitfaserkabel oder dergleichen eingekoppelt wird. Figur 8 und 10 zeigen eine solche Anordnung. Der austretende Laserstrahl (4) kann in Abwandlung der gezeigten Ausführungsform mehrteilig sein und aus mehreren, ggf. durch Strahlspaltung aufgeteilten Einzelstrahlen bestehen.

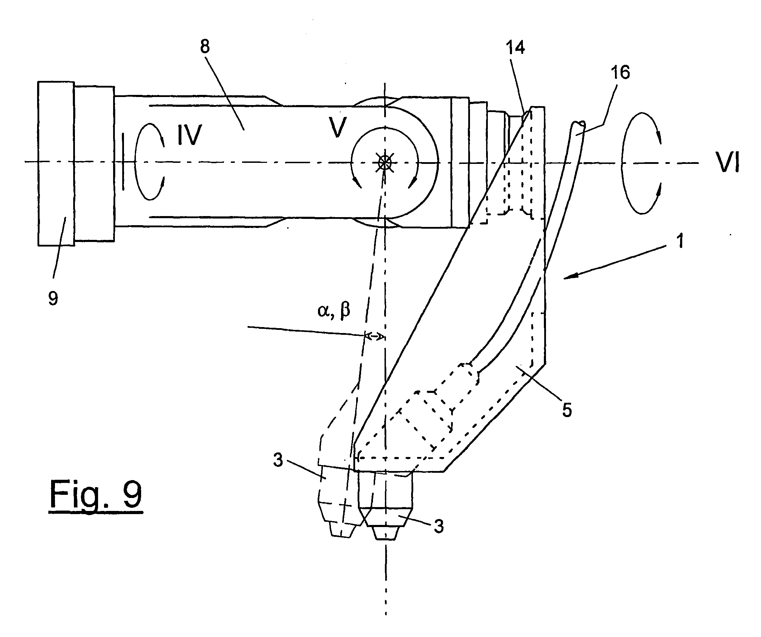

Das Laserwerkzeug (3) ist z.B. als Laserschweißkopf ausgebildet. Es hat eine Laseroptik mit einer festen Fokusbrennweite, die z.B. in der Ausführungsform von Figur 1 bis 4 ca. 150-400 mm betragen kann. Bei Figur 8 und 9 wird z.B. eine längere Festbrennweite von ca. 300-600 mm eingesetzt.

Die Brennweite kann ferner je nach Art der Lasereinheit variieren. Ein YAG-Laser hat typischerweise z.B. 240 mm Brennweite. Die Fokussieroptik ist in den Varianten von Figur 1 bis 4 sowie Figur 8 und 9 winkelfest ausgebildet, so dass der emittierte Laserstrahl (4) nicht abgelenkt wird. Bei Figur 10 kommt eine Scannereinrichtung (17) mit schwenkbaren Spiegeln zum Einsatz, mit der der Laserstrahl (4) abgelenkt werden kann.

Zum Ausgleich evtl. Fokussier- oder Positionierungenauigkeiten kann das Laserwerkzeug (3) einen Höhenausgleich haben, mit dem die Fokussieroptik in Strahlrichtung nachgestellt wird, um den Brennfleck und den Fokus auf der Oberfläche des Werkstücks (6) zu halten. Hierfür kann auch eine entsprechende Abstandsmesseinrichtung vorhanden sein.

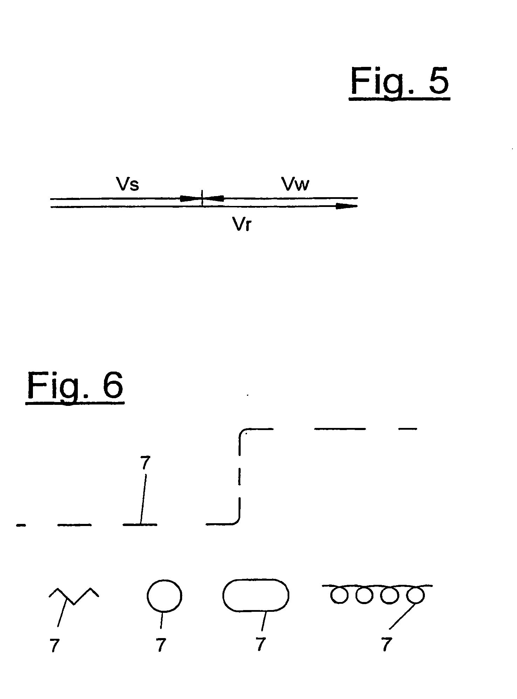

Das Werkstück (6) kann von beliebiger Art sein. Vorzugsweise handelt es sich um ein oder mehrere Karosserieteile, insbesondere Rohkarosserieteile, von Fahrzeugen. Figur 5 zeigt hierzu ein Beispiel mit einer Karosserie-Seitenwand. Das Werkstück (6) kann aus mehreren Bauteilen bestehen, die fügegerecht positioniert und durch eine Spanneinrichtung (nicht dargestellt) gespannt sind. Vorzugsweise ist das Werkstück (6) stationär gehalten, kann alternativ aber auch relativ zum vorzugsweise stehenden Roboter (2) oder Manipulator bewegt werden.

Das Laserwerkzeug (3) ist in den Varianten von Figur 1 bis 4 sowie Figur 8 und 9 mit Abstand von der Roboterhand (8) angeordnet und wird hierbei z.B. durch einen entsprechenden Ausleger (5) distanziert. Alternativ kann das Laserwerkzeug (3) ein entsprechend verlängertes und ggf. abgewinkeltes Gehäuse besitzen. In der Ausführungsform von Figur 1 bis 4 ist der Ausleger (5) länger als in der Bauform von Figur 8 und 9, wobei die Brennweitenverhältnisse sich entsprechend umgekehrt verhalten.

Ferner ist es möglich, auf einen Ausleger (5) zu verzichten und ein Laserwerkzeug (3) mit einer entsprechend längeren Fokusbrennweite von z.B. 600 - 1.500 mm direkt am Abtriebsflansch (14) anzuordnen.

In der Ausführungsform von Figur 1 bis 4 mit einem stehenden Werkstück (6) sind das Laserwerkzeug (3) und der Ausleger (5) plan am Abtriebsflansch (14) der Roboterhand (8) montiert, so dass die Abtriebsachse VI der Roboterhand (8) und die Austrittsachse des Laserstrahls (4) zusammen fallen. Alternativ kann gemäß Figur 8 und 9 die Roboterhand (8) um die quer liegende Handachse V um ca. 90° nach unten oder oben gedreht sein, wobei der Ausleger (5) quer am Abtriebsflansch (14) und quer zur Abtriebsachse VI angeordnet ist.

Zwischen dem unteren oder vorderen Ende des Laserwerkzeugs (3) und dem Werkstück (6) besteht ein freier Arbeitsabstand a. Die Brennweite b der im Laserwerkzeug (3) angeordneten und nicht näher dargestellten Fokussieroptik ist im wesentlichen gleich oder etwas größer. Mit x wird die Tool-Center-Point-Koordinate (TCP-Koordinate) in Werkzeug- bzw. Laserstrahlrichtung bezeichnet. Sie bezieht sich auf ein vorzugsweise im Zentrum des Abtriebsflansches (14) angeordnetes Flanschkoordinatensystem, welches als Bezug für die nachfolgend erläuterten Versatz- und Ausgleichsbewegungen sowie die Orientierungen des Laserstrahls (4) bzw. des Laserwerkzeugs (3) dient. Die TCP-Koordinate x ist vorzugsweise der Abstand zwischen Fokus und Fußpunkt des Flanschkoordinatensystems.

Der Roboter (2) hält in allen Varianten das Laserwerkzeug (3) mit einem vorzugsweise gleich bleibenden Abstand a vom Werkstück (6) und führt es in einer vorprogrammierten und vorzugsweise in der Robotersteuerung (13) gespeicherten Bahn entlang der Werkstückoberfläche. Zwischen Laserwerkzeug (3) und Werkstück (6) besteht hierbei vorzugsweise kein Berührungskontakt. Diese globale Führungsbewegung wird als Versatzbewegung bezeichnet, wobei der Roboter mit der Roboterhand (8) und insbesondere mit dem Abtriebsflansch (14) über die Bewegung seiner Achsen einen Versatzweg f und eine Versatzgeschwindigkeit Vr entlang der Bahn (nicht dargestellt) am Werkstück (6) ausführt. Im Rahmen dieser Versatzbewegung würde normalerweise das Laserwerkzeug (3) derart bewegt und geführt, dass der austretende Laserstrahl (4) senkrecht zur Werkstückoberfläche gerichtet ist.

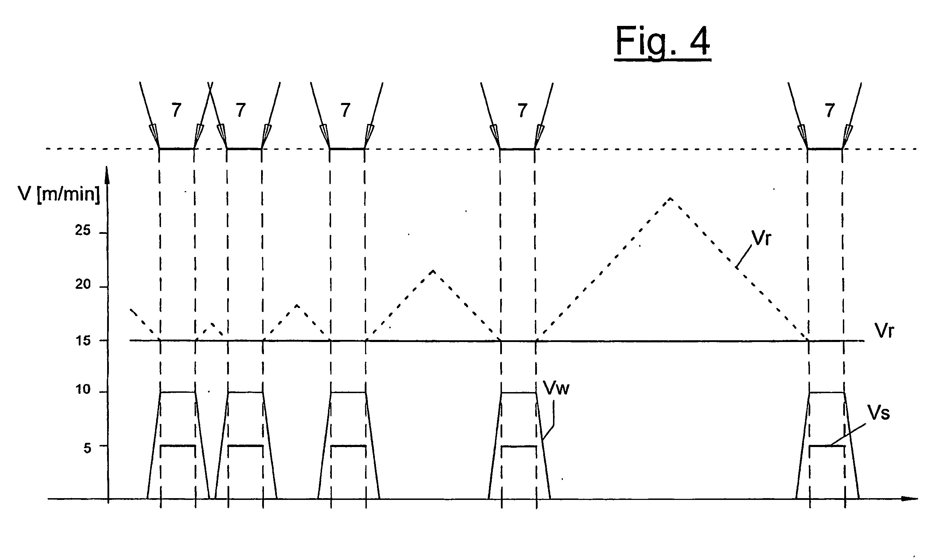

Mit dem Laserwerkzeug (3) können beliebige unterschiedlichste Bearbeitungsvorgänge durchgeführt werden. Im bevorzugten Ausführungsbeispiel wird ein Schweißprozess durchgeführt. Die Bearbeitungsvorgänge sind vorzugsweise unterbrochen oder intermittierend, wobei z.B. Steppnähte gesetzt werden, die aus einer Vielzahl von kurzen Nähten oder Nahtabschnitten (7) bestehen, die mit beliebigem Abstand hintereinander in Bahnrichtung gesetzt werden. Figur 4 verdeutlicht im oberen Teil eine solche Steppnaht. Beim Steppnahtschweißen führt der Roboter (8) zwischen den einzelnen Nähten (7) Transportbewegungen aus, bei denen der Laserstrahl (4) ausgeschaltet ist. Dies kann in beliebig geeigneter Weise durch Abschalten der Laserstrahlquelle, alternativ aber auch durch zeitweises Umschalten des Laserstrahls mittels einer Weiche auf andere Laserwerkzeuge geschehen. Die Nahtlängen, Nahtformen und die Transportwege können variieren.

Beim Schweißen der Steppnaht wird in den Schweißphasen der Versatzbewegung des Roboters (2) eine zumindest partiell entgegen gerichtete Ausgleichsbewegung des Laserstrahls (4) überlagert. Die Versatzgeschwindigkeit Vr ist hierbei größer als die entgegen gerichtete Ausgleichsgeschwindigkeit Vw. Hierdurch wird z.B. die am Werkstück (6) wirkende Bearbeitungs- oder Schweißgeschwindigkeit Vs des Laserstrahls (4) verringert und ist wesentlich kleiner als die Versatzgeschwindigkeit Vr. Zwischen den Schweißphasen kann eine Rückholbewegung erfolgen, um den Laserstrahl vor oder am Beginn der nächsten Schweißphase wieder in die Ausgangslage zu bringen.

Alternativ kann die entgegen gerichtete Ausgleichsgeschwindigkeit Vw zumindest stellenweise größer als die Versatzgeschwindigkeit Vr sein, was sogar eine rückwärts gerichtete Bearbeitungs- oder Schweißgeschwindigkeit Vs erzeugt. Hierdurch lassen sich z.B. beim Schweißen Schuppenlagen durch eine abwechselnd vorwärts und rückwärts gerichtete Pendelbewegung des Laserstrahls (4) erzeugen. Zusätzlich kann der Laserstrahl (4) bei der Ausgleichsbewegung eine seitliche Auslenkung erhalten.

Figur 6 zeigt verschiedene, durch die beanspruchte Technik erzeugbare Nahtformen. In der einfachsten und bevorzugten Ausführungsvariante besteht die Steppnaht aus einzelnen und im Wesentlichen geraden oder einfach gebogenen Nahtabschnitten (7). Dies ist im oberen Teil von Figur 6 dargestellt. Der untere Teil von Figur 6 zeigt weitere Abwandlungen. Dies können einerseits quer zur Bahnrichtung ausgelenkte Zick-Zack-Nahtformen sein. Außer diesen endlichen Nahtformen sind auch endlose Nahtformen, z. B. Kreise, Ovale oder Spiralformen gemäß Figur 6 sein. In den nachfolgenden Erläuterungen wird auf das bevorzugte Ausführungsbeispiel von Steppnähten aus geraden Nahtstrichen eingegangen. Für die anderen in Figur 6 gezeigten Nahtformen gelten entsprechende Abwandlungen.

Die Ausgleichsbewegung des Laserstrahls (4) ist vorzugsweise eine Winkelbewegung, die zumindest teilweise, d.h. mit einer Bewegungskomponente, in Richtung der verfolgten Bahn und entgegen der Versatzbewegung erfolgt. Ggf. ist auch die erwähnte seitliche Auslenkbewegung möglich. Die Ausgleichsbewegung des Laserstrahls (4) wird in den Ausführungsformen von Figur 1 bis 4 und Figur 8, 9 durch eine Schwenkbewegung der Roboterhand (8) um mindestens eine ihrer Handachsen IV, V, VI ausgeführt.

Im gezeigten Ausführungsbeispiel von Figur 1 mit der geraden Steppnaht an einem stehenden Werkstück (6) führt der ebenfalls stehende Roboter (2) eine im wesentlichen parallel zum Werkstück (6) ausgerichtete Versatzbewegung Vr mit seinen Achsen I bis IV aus. Die Ausgleichsbewegung erfolgt durch eine Drehung von Abtriebsflansch (14), Ausleger (5) und Laserwerkzeug (3) um die quer liegende Handachse V. Pfeile Vr und Vw verdeutlichen die Versatz- und Ausgleichsbewegung. Eine evtl. seitliche Auslenkbewegung kann z.B. bei einer um 90° nach oben oder unten geschwenkten Roboterhand (8) durch eine ggf. überlagerte Drehung der Flanschachse VI erfolgen.

In der Variante von Figur 8 und 9 werden entsprechende Versatz- und Ausgleichsbewegungen an einem liegenden Werkstück (6) durch die Fahrbewegung des Roboters (2) mit den Achsen I bis IV und die Drehung um die Handachse V ausgeführt.

Die für die Ausgleichsbewegung zuständige Handachse, hier die Achse V, ist unabhängig von der Versatzbewegung steuerbar. Dies schließt nicht aus, dass die betreffende Handachse an der Versatzbewegung beteiligt ist, um das Laserwerkzeug (3) entlang der Werkstückoberfläche und der gewünschten Bahn zu führen. Diesem Achsanteil an der Versatzbewegung ist jedoch die Ausgleichs-Schwenkbewegung überlagerbar. Zu diesem Zweck ist es nützlich, wenn die Robotersteuerung (13) nicht nur bahnbezogene Winkeländerungen zulässt, sondern vielmehr sowohl bahnbezogen wie auch winkelbezogen programmiert werden kann.

Durch den Abstand x der TCP-Koordinate führen kleine Winkelbewegungen um die Handachse V zu entsprechend großen Wegen des Laserstrahls (4) am Werkstück (6). Dementsprechend führt die überlagerte und entgegen gerichtete Ausgleichsbewegung zur einer Verringerung der Bearbeitungs- und Schweißgeschwindigkeit Vs am Werkstück (6).

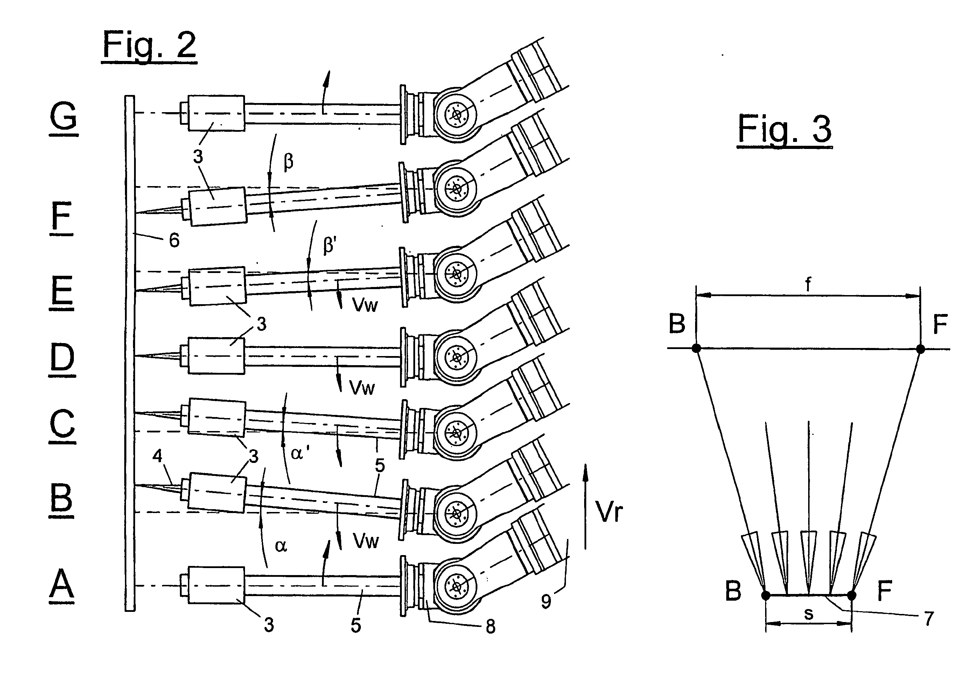

Figur 2 verdeutlicht einen solchen Bewegungsablauf beim Schweißen eines kurzen Nahtabschnittes in sieben Schritten A bis G.
Schritt A zeigt die Ausgangsposition am Ende einer Transportphase mit ausgeschaltetem Laserstrahl (4). Die Laserstrahlachse bzw. die Orientierung des Laserwerkzeugs (3) und des Auslegers (5) ist senkrecht zur Werkstückoberfläche gerichtet.
Aus dieser Position startet die Ausgleichsbewegung, wobei das Laserwerkzeug (3) vor Schweißbeginn in Richtung der durch einen Pfeil Vr verdeutlichten Versatzbewegung gedreht und schräg zur Werkstückoberfläche ausgerichtet wird. Der danach eingeschaltete Laserstrahl (4) hat zum Beginn der Schweißnaht gemäß Schritt B einen vorwärts gerichteten schrägen Strahlwinkel α, mit dem er auf die Oberfläche des Werkstücks (6) trifft. Zu Schweißbeginn läuft der Auftreffpunkt des Laserstrahls (4) dem Laserwerkzeug (3) bzw. dem Fußpunkt des Flanschkoordinatensystems voraus. Dieser Winkel α ist zu Schweißbeginn maximal und kann je nach Laserart und anderen nachfolgend näher erläuterten Schweißbedingungen, z.B. ca. 15° gegen die gestrichelt dargestellte Senkrechte zur Werkstückoberfläche betragen. Je nach Einsatzfall sind auch größere Winkel von z.B. 60° möglich.
In der weiteren Versatzbewegung wird nun durch die kontinuierlich entgegen gerichtete Ausgleichsbewegung gemäß Pfeil Vw um die Handachse V der Strahlwinkel α verkleinert. Bild C zeigt dies mit einem halbierten schräg vorwärts gerichteten Strahlwinkel α' von ca. 7,5°.
Im Bild D ist der Strahlwinkel des Laserstrahls vertikal zur Werkstückoberfläche.
In der weiteren Versatzbewegung wird durch die fortgesetzte Ausgleichsbewegung Vw ein schräg rückwärts gerichteter Strahlwinkel β, β' erzeugt, der sich zunehmend vergrößert. Im Bild E beträgt der rückwärtige Strahlwinkel β' ca. 7,5°.
Bild F verdeutlicht das Ende der Naht (7) und einen maximalen rückwärtigen Strahlwinkel β von ca. 15°. Am Schweißende läuft der Auftreffpunkt des Laserstrahls (4) dem Laserwerkzeug (3) bzw. dem Fußpunkt des Flanschkoordinatensystems hinterher.
Der Laserstrahl (4) wird am Nahtende abgeschaltet, wobei das Laserwerkzeug (3) anschließend in der Transportphase in einer Rückholbewegung in Richtung der Versatzbewegung gedreht und senkrecht zur Werkstückoberfläche ausgerichtet wird. Bild G verdeutlicht diese Stellung, die zugleich die Ausgangsposition A für den nächsten Nahtabschnitt und die folgende Schweißphase ist.

Die Ausgleichsbewegung läuft vorzugsweise symmetrisch zum Nahtabschnitt (7) ab, so dass die vorwärts und rückwärts gerichteten Strahlwinkel α, α', β, β' in ihrem Absolutwert in etwa gleich groß sind. Die Rückholbewegung kann ebenfalls gleichmäßig sein. Die Versatzgeschwindigkeit Vr ist während des Schweißens vorzugsweise konstant. Die Ausgleichsgeschwindigkeit Vw ist vorzugsweise ebenfalls konstant. Durch die Überlagerung ergibt sich eine konstante Schweißgeschwindigkeit Vs. Bei Bedarf können allerdings die Größen- und Relativverhältnisse der Ausgleichs- und Versatzbewegung bzw. deren Geschwindigkeiten Vw und Vr variieren, wobei sich auch die Schweißgeschwindigkeit Vs ändert.

Durch die drehende Ausgleichsbewegung beschreibt der Fokuspunkt einen Bogen. Zum Ausgleich kann entweder der Roboter (2) mit seinen Achsen I bis V eine entsprechend entgegen gerichtete bogenförmige Versatzbewegung ausführen, so dass der Fokuspunkt stets in konstanter Position zur Werkstückoberfläche bleibt. Er kann dabei z.B. auf oder knapp unter Werkstückoberfläche liegen. Alternativ kann über die vorerwähnte Höhenverstellung der Fokussiereinrichtung eine Kompensation der Bogenbewegung und deren damit normalerweise einhergehenden Fokusverschiebung stattfinden.

Wie Figur 3 verdeutlicht, ist beim Schweißen der zurückgelegte Versatzweg f des Flanschkoordinatenbezugspunkts wesentlich größer als der Schweißweg bzw. die Nahtlänge s.

Figur 4 verdeutlicht die betragsmäßigen Geschwindigkeitsverhältnisse in einem Diagramm, wobei im oberen Teil schematisch Nahtabschnitte (7) der Steppnaht und die dabei auftretenden vorwärts und rückwärts gerichteten Strahlwinkel dargestellt sind.

Figur 5 zeigt die Überlagerung der Geschwindigkeitsvektoren Vr, Vw und Vs unter Berücksichtigung ihrer Größe und Richtung für das Beispiel einer geraden Steppnaht gemäß Figur 1 bis 4.

Der Roboter (2) kann während der Schweiß- und Transportphasen eine gleichbleibende Versatzgeschwindigkeit Vr fahren, wie sie in Figur 4 mit einer durchgezogenen Linie dargestellt ist. Durch die Ausgleichsbewegung wird eine exakt entgegen gerichtete Ausgleichsgeschwindigkeit Vw des Fokus an der Werkstückoberfläche erzeugt, die z.B. ebenfalls konstant und halb so groß wie die Versatzgeschwindigkeit Vr ist. Durch die Überlagerung der beiden entgegengesetzt gerichteten Geschwindigkeiten Vr und Vw gemäß Figur 5 ergibt sich eine Schweißgeschwindigkeit Vs von 5 m/min., die z.B. der maximal möglichen Prozessgeschwindigkeit entspricht. Mit qualitativ verbesserten Laserwerkzeugen (3) oder bei anderen Bearbeitungsprozessen lassen sich auch andere und höhere Schweiß- oder Bearbeitungsgeschwindigkeiten erzielen.

In Abwandlung der in Figur 4 dargestellten Verhältnisse können die Versatzgeschwindigkeit Vr und die Ausgleichsgeschwindigkeit Vw während der Schweißphase nicht konstant und variabel sein. Dies ist z. B. erforderlich, um die in Figur 6 gezeigten unterschiedlichen Nahtformen herstellen zu können.

Bei einem konventionellen Schweißprozess entspricht die Versatzgeschwindigkeit Vr der Schweißgeschwindigkeit Vs. Dank der Ausgleichsbewegung und Abstandsvergrößerung x kann die Versatzgeschwindigkeit Vr gegenüber dem Stand der Technik wesentlich erhöht und z.B. auf das Dreifache gesteigert werden. Hierbei ist es in Abwandlung der vorbeschriebenen Ausführungsform auch möglich, in den Transportphasen die Versatzgeschwindigkeit Vr noch weiter zu beschleunigen, was in Figur 4 durch gestrichelte Linien verdeutlicht wird.

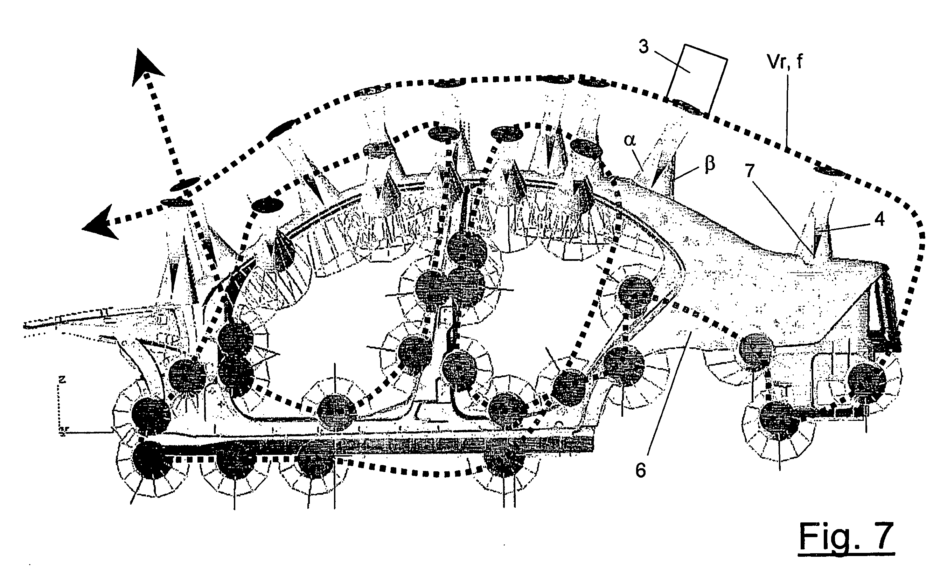

Durch das insgesamt gesteigerte Geschwindigkeitsniveau der Versatzgeschwindigkeit Vr kann der Schweißroboter die Abstände zwischen den Schweißnahtabschnitten sehr viel schneller als bisher überbrücken und dadurch in gleicher Zeit mehr Schweißnähte oder Nahtabschnitte setzen als bisher. Figur 7 verdeutlicht z.B. einen solchen Ablauf beim Schweißen einer Seitenwand einer Fahrzeugkarosserie in einer einzigen Umlaufbewegung. Von einem einzelnen Schweißroboter (2) gemäß Figur 1 werden hierbei sämtliche Nahtabschnitte in einer Umlaufbahn mit mehreren, einander gegebenenfalls kreuzenden Bewegungsschleifen gesetzt.

Die Fahrzeugkarosserie wird mit ein oder mehreren Steppnähten (7) sozusagen "genäht". Die mit optimaler Schweißgeschwindigkeit und maximaler Leistung gesetzte Steppnaht (7) sorgt für eine hohe beanspruchungsgerechte Festigkeit der Bauteilverbindungen und kann das bisher getrennte Heften und nachfolgende Ausschweißen ersetzen und zu einem Schweißvorgang in einer Station verbinden. Durch das Steppen und die Nahtunterbrechungen wird auch der Wärmeeintrag an der Fahrzeugkarosserie begrenzt.

Für das "Nähen" ist es günstig, ein Laserwerkzeug (3) mit hoher Durchschnitts- oder Dauerstrichleistung CW und hoher Strahlqualität, z.B. einen Faserlaser, einzusetzen. Hierbei kann auch die Nahtform in geeigneter Weise gewählt und eingestellt werden, um die gewünschte beanspruchungsgerechte Festigkeit zu erreichen. Das Laserwerkzeug (3) hat vorzugsweise eine veränderliche, im Prozess aber bevorzugt fest einstellbare und konstant gehaltene Pulsfrequenz. Die Ein- und Ausschaltzeiten während des Schweißens können gesteuert werden und variieren. Das Laserwerkzeug (3) ist in seiner Leistung schaltbar und modulierbar. Es besitzt hierfür vorzugsweise einen Frequenzgenerator, mit dem die Pulsfrequenz und die Leistung des Lasers gesteuert und an die Bauteilwerkstoffe, Nahtlängen und Nahtformen angepasst werden. Ferner kann auch der Laserstrahl für die Steppnaht (7) mit den Transport- und Schweißphasen in der erforderlichen Frequenz ein- und ausgeschaltet werden.

Die möglichen Schweißnahtlängen hängen unter anderem vom TCP-Abstand x ab. Je größer dieser Abstand x ist, desto größer ist die maximale Nahtlänge s.

Zudem kann die Schweißnahtlänge s vom Verhältnis zwischen Versatzgeschwindigkeit Vr und maximaler Schweißgeschwindigkeit Vs abhängen. Je kleiner die Unterschiede zwischen Vr und Vs sind, desto größer kann die Schweißnahtlänge s sein. Umgekehrt erlauben kurze Nahtlängen s eine wesentliche Steigerung der Versatzgeschwindigkeit Vr und damit der Gesamt-Prozessleistung.

Die Nahtlängen s hängen andererseits von den maximal möglichen schrägen Strahlwinkeln α, β ab. Diese Strahlwinkel können je nach Bauteilwerkstoff und Art bzw. Leistung des Laserwerkzeugs (3) variieren. Je größer diese Strahlwinkel α, β sind, desto größer kann die Nahtlänge s sein.

In der Praxis nutzbare Versatzgeschwindigkeiten Vr des Roboters bei einer Schweißgeschwindigkeit Vs von z.B. 6 m/min können bei entsprechendem Fokusabstand x ca. 50 m/min und mehr betragen. Praktisch nutzbare Nahtlängen s liegen z.B. im Bereich zwischen 5 und 50 mm.

Figur 8 und 9 zeigen die eingangs erwähnte Variante mit der Winkellage des Auslegers (5) und des Laserwerkzeugs (3). Der Ausleger (5) ist mit einer Grundplatte am Abtriebsflansch (14) befestigt und ragt schräg nach hinten, so dass das am vorderen Auslegerende montierte Laserwerkzeug (3) gegenüber dem Abtriebsflansch (14) nach hinten und nach unten versetzt ist. Das Laserwerkzeug (3) ist dabei so ausgerichtet, dass der emittierte Laserstrahl (4) in seiner Verlängerung die quer liegende Handachse V in einem Schnittpunkt (18) schneidet. Dieser Schnittpunkt (18) ist vorzugsweise zugleich das Schnittzentrum aller drei Handachsen IV, V und VI.

Bei dieser Ausführungsform ist die TCP-Koordinate x der Abstand zwischen dem Schnittpunkt (18) und dem Fokuspunkt auf der Werkstückoberfläche (6). Der Roboter (2) führt die Versatzbewegung durch eine Bewegung seiner Achsen I - IV durch. Die Ausgleichsbewegung erfolgt durch eine Drehung der Roboterhand (8), des Auslegers (5) und des Laserwerkzeugs (3) um die Handachse V. Hierbei entstehen auch die im Ausführungsbeispiel zu Figur 2 beschriebenen vorwärts und rückwärts gerichteten Strahlwinkel α und β.

In der Variante von Figur 8 und 9 ist der Ausleger (5) kürzer als im ersten Ausführungsbeispiel von Figur 1 - 4. Die Fokusbrennweite b der Laseroptik kann je nach gewünschtem Arbeitsabstand a gleich oder größer als im ersten Ausführungsbeispiel sein.

Figur 10 verdeutlicht eine bewegliche Scannereinrichtung (17). In diesem Fall kann auf einen Ausleger (5) verzichtet werden. Die Scannereinrichtung (17) ist z.B. als eine Scanneroptik mit zwei oder mehr drehbeweglichen und von der Robotersteuerung (13) aus in ihren Bewegungen steuerbaren Spiegeln ausgebildet. Durch die Spiegeldrehungen kann der Laserstrahl (4) in ein oder zwei Achsen abgelenkt werden. Die Scannereinrichtung (17) ist vorzugsweise im Gehäuse des Laserwerkzeugs (3) untergebracht, kann alternativ aber auch extern angeordnet sein. Die Fokussieroptik hat auch hier vorzugsweise eine feste Brennweite.

Abwandlungen der gezeigten Ausführungsformen sind in verschiedener Weise möglich. Die Lage und Ausbildung des Werkstücks (6) kann sich ändern, wobei der Roboter (2) seine Orientierung entsprechend variiert. Hierdurch können auch räumliche Bahn- und Nahtverläufe wie bei der Karosserie (6) von Figur 7 bearbeitet werden. Der Roboter (2) ändert seine Orientierung hierbei vorzugsweise derart, dass stets nur eine und vorzugsweise die gleiche Handachse für die Ausgleichsbewegung zuständig ist.

In weiterer Abwandlung ist es möglich, die Ausgleichsbewegung alternativ durch mehrere Handachsen auszuführen.

Variationsmöglichkeiten sind ferner bei der Laseroptik vorhanden, die z.B. eine veränderbare Fokusbrennweite haben kann. Die Laseroptik kann ansonsten von beliebiger Bauart sein.

Variabel ist auch die Ausgestaltung des Manipulators (2). Hierbei kann es sich im einfachsten Fall um eine Schlittenanordnung mit mehreren translatorischen Achsen, z.B. einem x-y-Schlitten handeln. Auch sind Mischformen von rotatorischen und translatorischen Achsen und andere Zahlen von Achsen und Freiheitsgraden möglich.

Variabel sind zudem die Art der Laserprozesse. Dies betrifft neben dem Schweißen z.B. das Schneiden, das Oberflächenbearbeiten, z.B. Gravieren, oder das gezielte Oberflächenerwärmen.

### BEZUGSZEICHENLISTE

- 1: Laserbearbeitungsvorrichtung
- 2: Manipulator,Roboter
- 3: Laserwerkzeug
- 4: Laserstrahl
- 5: Ausleger
- 6: Werkstück
- 7: Naht
- 8: Manipulatorhand, Roboterhand
- 9: Manipulatorarm, Roboterarm
- 10: Schwinge
- 11: Konsole
- 12: Sockel
- 13: Robotersteuerung
- 14: Abtriebsflansch
- 15: Laserquelle
- 16: Leitung
- 17: Scannereinrichtung, Scanneroptik
- 18: Schnittpunkt, Schnittzentrum

- a: freier Arbeitsabstand
- b: Brennweite der Fokussieroptik
- x: TCP-Koordinate in Werkzeugrichtung

- Vr: Versatzgeschwindigkeit Roboter
- Vs: Bearbeitungsgeschwindigkeit, Schweißgeschwindigkeit
- Vw: Ausgleichsgeschwindigkeit
- f: Versatzweg Roboter
- s: Bearbeitungsweg, Schweißweg, Nahtlänge
- α: Strahlwinkel vorwärts
- α': Strahlwinkel vorwärts
- β: Strahlwinkel rückwärts
- β': Strahlwinkel rückwärts

## Patentansprüche

1. Verfahren zum Bearbeiten von Werkstücken (6) mit einem bewegten Laserstrahl (4), wobei das Laserwerkzeug (3) von einem mehrachsigen mechanischen Manipulator (2) an einer Manipulatorhand (8) mit Abstand über dem Werkstück (6) gehalten und entlang einer vorgegebenen Bahn in einer Versatzbewegung bewegt wird, **dadurch gekennzeichnet, dass** während des Bearbeitungsvorgangs der Versatzbewegung eine zumindest partiell entgegengerichtete Ausgleichsbewegung des Laserstrahls (4) überlagert wird, wobei die Ausgleichsbewegung des Laserstrahls (4) durch eine Schwenkbewegung der Manipulatorhand (8) um eine ihrer Handachsen ausgeführt wird.

2. Verfahren nach Anspruch 1, **dadurch gekennzeichnet, dass** das Werkstück (6) intermittierend bearbeitet wird, wobei sich Bearbeitungs- und Transportphasen abwechseln, wobei zu Beginn einer Bearbeitungsphase der Auftreffpunkt des Laserstrahls (4) dem Laserwerkzeug (3) oder dem Fußpunkt eines Flanschkoordinatensystems vorausläuft und am Ende der Bearbeitungsphase nacheilt.

3. Verfahren nach Anspruch 1 oder 2, **dadurch gekennzeichnet, dass** während des Bearbeitungsvorgangs der Versatzbewegung zusätzlich eine zumindest partiell quer gerichtete Ausgleichsbewegung des Laserstrahls (4) überlagert wird.

4. Verfahren nach Anspruch 1, 2 oder 3, **dadurch gekennzeichnet, dass** die Versatzgeschwindigkeit Vr größer als die entgegengerichtete Ausgleichsgeschwindigkeit Vw ist.

5. Verfahren nach einem der vorhergehenden Ansprüche, **dadurch gekennzeichnet, dass** die Versatzgeschwindigkeit Vr größer als die Bearbeitungsgeschwindigkeit Vs des Laserstrahls (4) am Werkstück (6) ist.

6. Verfahren nach einem der vorhergehenden Ansprüche, **dadurch gekennzeichnet, dass** die Ausgleichsbewegung des Laserstrahls (4) eine Winkelbewegung ist.

7. Verfahren nach einem der vorhergehenden Ansprüche, **dadurch gekennzeichnet, dass** das Laserwerkzeug (3) mittels eines Auslegers (5) mit Abstand von der Manipulatorhand (8) gehalten wird.

8. Verfahren nach einem der Ansprüche 1 bis 6, **dadurch gekennzeichnet, dass** die Ausgleichsbewegung des Laserstrahls (4) durch eine bewegliche Scannereinrichtung (17) am Laserwerkzeug (3) ausgeführt wird.

9. Verfahren nach einem der vorhergehenden Ansprüche, **dadurch gekennzeichnet, dass** der Laserstrahl (4) zu Beginn der Bearbeitung mit einem schräg vorwärts gerichteten Strahlwinkel α, α' auf das Werkstück (6) gerichtet wird.

10. Verfahren nach einem der vorhergehenden Ansprüche, **dadurch gekennzeichnet, dass** der Laserstrahl (4) am Ende der Bearbeitung mit einem schräg rückwärts gerichteten Strahlwinkel β, β' auf das Werkstück (6) gerichtet wird.

11. Verfahren nach einem der vorhergehenden Ansprüche, **dadurch gekennzeichnet, dass** der Manipulator (2) bei der Bearbeitung eine im wesentlichen konstante Versatzbewegung ausführt.

12. Verfahren nach einem der vorhergehenden Ansprüche, **dadurch gekennzeichnet, dass** der Manipulator (2) in den Transportphasen zwischen den Bearbeitungen eine im wesentlichen konstante oder eine beschleunigte Versatzbewegung ausführt.

13. Vorrichtung zum Bearbeiten von Werkstücken (6) mit einem bewegten Laserstrahl (4), wobei das Laserwerkzeug (3) von einem mehrachsigen mechanischen Manipulator (2) an einer Manipulatorhand (8) gehalten und entlang einer vorgegebenen Bahn in einer Versatzbewegung bewegbar ist, **dadurch gekennzeichnet, dass** der Manipulator (2) eine Einrichtung zur Erzeugung einer während des Bearbeitungsvorgangs ablaufenden und der Versatzbewegung entgegengerichteten und überlagerten Ausgleichsbewegung des Laserstrahls (4) aufweist, wobei das Laserwerkzeug (3) eine Fokussieroptik zur Erzeugung eines winkelfesten Laserstrahls (4) aufweist.

14. Vorrichtung nach Anspruch 13, **dadurch gekennzeichnet, dass** der Manipulator (2) eine mehrachsige Manipulatorhand (8) aufweist, bei der mindestens eine Handachse unabhängig von der Versatzbewegung steuerbar ist.

15. Vorrichtung nach Anspruch 13 oder 14, **dadurch gekennzeichnet, dass** das Laserwerkzeug (3) mittels eines Abstand bildenden Auslegers (5) an der Manipulatorhand (8) montiert ist.

16. Vorrichtung nach einem der vorhergehenden Ansprüche 13 - 15, **dadurch gekennzeichnet, dass** das Laserwerkzeug (3) eine feste Fokusbrennweite aufweist.

17. Vorrichtung nach einem der vorhergehenden Ansprüche 13 - 16, **dadurch gekennzeichnet, dass** das Laserwerkzeug (3) eine Brennweite von ca. 150 bis 400 mm aufweist.

18. Vorrichtung nach Anspruch 13, **dadurch gekennzeichnet, dass** das Laserwerkzeug (3) eine bewegliche, steuerbare Scannereinrichtung (17) aufweist.

19. Vorrichtung nach einem der vorhergehenden Ansprüche 13 - 18, **dadurch gekennzeichnet, dass** der Manipulator (2) als mindestens sechsachsiger Gelenkarmroboter ausgebildet ist.

20. Vorrichtung nach einem der vorhergehenden Ansprüche 13 - 19, **dadurch gekennzeichnet, dass** das Laserwerkzeug (3) als Schweißwerkzeug ausgebildet ist.

## Claims

1. Method for machining workpieces (6) with the aid of a moving laser beam (4), the laser tool (3) being held by a multiaxial mechanical manipulator (2) on a manipulator hand (8) at a distance above the workpiece (6), and being moved along a prescribed track in an offset movement, **characterized in that** during the machining operation of the offset movement an at least partially counterdirected compensating movement of the laser beam (4) is superimposed and the compensating movement of the laser beam (4) is executed by a slewing movement of the manipulator hand (8) about one of its hand axes

2. Method according to Claim 1, **characterized in that** the workpiece (6) is machined intermittently, machining and transport phases alternating, and the impingement point of the laser beam (4) leading the laser tool (3) or the base point of a flange coordinate system at the beginning of a machine phase, and lagging behind it at the end of the machining phase

3. Method according to Claim 1 or 2, **characterized in that** during the machining operation of the offset movement an at least partially transversely directed compensating movement of the laser beam (4) is additionally superimposed.

4. Method according to Claim 1, 2 or 3, **characterized in that** the offset speed Vr is greater than the counterdirected compensating speed Vw.

5. Method according to one of the preceding claims, **characterized in that** the offset speed Vr is greater than the machining speed Vs of the laser beam (4) on the workpiece (6).

6. Method according to one of the preceding claims, **characterized in that** the compensating movement of the laser beam (4) is an angular movement.

7. Method according to one of the preceding claims, **characterized in that** the laser tool (3) is held by means of a boom (5) at a distance from the manipulator hand (8).

8. Method according to one of Claims 1 to 6, **characterized in that** the compensating movement of the laser beam (4) is executed by a movable scanning device (17) on the laser tool (3).

9. Method according to one of the preceding claims, **characterized in that** at the beginning of the machining, the laser beam (4) is directed onto the workpiece (6) at a beam angle α, α' directed obliquely forwards.

10. Method according to one of the preceding claims, **characterized in that** at the end of the machining, the laser beam (4) is directed onto the workpiece (6) at a beam angle β, β' directed obliquely backwards.

11. Method according to one of the preceding claims, **characterized in that** during the machining the manipulator (2) executes a substantially constant offset movement.

12. Method according to one of the preceding claims, **characterized in that** in the transport phases between the machinings the manipulator (2) executes a substantially constant or an accelerated forward offset movement.

13. Device for the machining of workpieces (6) with the aid of a moving laser beam (4), the laser tool (3) being held on a manipulator hand (8) by a multiaxial mechanical manipulator (2), and being capable of being moved along a prescribed track in an offset movement, **characterized in that** the manipulator (2) has a device for generating a compensating movement of the laser beam (4) which proceeds during the machining operation and is counterdirected to and superimposed on the offset movement and that the laser tool (3) has a focussing optics for generating an angularly fixed laser beam (4).

14. Device according to Claim 13, **characterized in that** the manipulator (2) has a multiaxial manipulator hand (8) in the case of which at least one hand axis can be controlled independently of the offset movement.

15. Device according to Claim 13 or 14, **characterized in that** the laser tool (3) is mounted on the manipulator hand (8) by means of a distancing boom (5).

16. Device according to one of the preceding Claim 13, 14 or 15, **characterized in that** the laser tool (3) has a fixed focal length.

17. Device according to one of the preceding Claims 13-16, **characterized in that** the laser tool (3) has a focal length of approximately 150 to 400 mm.

18. Device according to Claim 13, **characterized in that** the laser tool (3) has a movable, controllable scanning device (17).

19. Device according to one of the preceding Claims 13 -18, **characterized in that** the manipulator (2) is designed as an at least six-axis jointed arm robot.

20. Device according to one of the preceding Claims 13-19, **characterized in that** the laser tool (3) is designed as a welding tool.

## Revendications

1. Procédé pour usiner des pièces (6) à l'aide d'un rayon laser (4) mobile, dans lequel l'outil à laser (3) est maintenu à distance au-dessus de la pièce (6) par un manipulateur (3) mécanique à plusieurs axes sur une main de manipulateur (8) et est déplacé le long d'une voie prédéfinie dans un mouvement de décalage, **caractérisé en ce que** pendant l'opération d'usinage on superpose au mouvement de décalage un mouvement de compensation - au moins en partie en sens contraire - du rayon laser (4) et le mouvement de compensation du rayon laser (4) est réalisé par un mouvement de pivotement de la main de manipulateur (8) autour d'un de ses axes de main.

2. Procédé selon la revendication 1, **caractérisé en ce que** la pièce (6) est usinée par intermittence de sorte que des phases d'usinage et de transport se succèdent, qu'au début d'une phase d'usinage le point d'incidence du rayon laser (4) précéde l'outil à laser (3) ou la base d'un système de coordonnées de bridage et le suit à la fin de la phase d'usinage.

3. Procédé selon la revendication 1 ou 2, **caractérisé en ce que** pendant l'opération d'usinage un movement de compensation - au moins en partie orienté transversalement - du rayon laser (4) est en outré superposé au mouvement de décalage.

4. Procédé selon la revendication 1, 2 ou 3, **caractérise en ce que** la vitesse de décalage Vr est supérieure à la vitesse de compensation Vw en sens opposé.

5. Procédé selon l'une des revendications précédentes, **caractérisé en ce que** la vitesse de décalage Vr est supérieure à la vitesse d'usinage Vs du rayon laser (4) sur la pièce (6).

6. Procédé selon l'une des revendications précédentes, **caractérisé en ce que** le mouvement de compensation du rayon laser (4) est un mouvement angulaire.

7. Procédé selon l'une des revendications precédentes, **caractérisé en ce que** l'outil à laser (3) est maintenu à distance de la main de manipulateur (8) au moyen d'un bras (5).

8. Procédé selon l'une des revendications 1 à 6, **caractérisé en ce que** le mouvement de compensation du rayon laser (4) est réalisé sur l'outil à laser (3) par un dispositif de balayage (17) mobile.

9. Procédé selon l'une des revendications précédentes, **caractérisé en ce que**, au début de l'usinage, le rayon laser (4) est dirigé vers la pièce (6) selon un angle de rayon α, α' dirigé obliquement vers l'avant.

10. Procédé selon l'une des revendications précédentes, **caractérisé en ce que**, à la fin de l'usinage, le rayon laser (4) est dirigé vers la pièce (6) selon un angle de rayon β, β' dirigé obliquement vers l'arrière.

11. Procédé selon l'une des revendications précédentes, **caractérisé en ce que** le manipulateur (2) exécute un mouvement de décalage pratiquement constant lors de l'usinage.

12. Procédé selon l'une des revendications précédentes, **caractérisé en ce que** le manipulateur (2) execute un mouvement de décalage pratiquement constant ou accéléré pendant les phases de transport entre les usinages.

13. Dispositif pour usiner des pièces (6) à l'aide d'un rayon laser (4) mobile, dans lequel l'outil à laser (3) est maintenu par un manipulateur (2) mécanique à plusieurs axes sur une main de manipulateur et peut être déplacé le long d'une voie prédèfinie dans un mouvement de décalage, **caractérisé en ce que** le manipulateur (2) comporte un dispositif pour que le rayon laser (4) exécute un mouvement de compensation qui se déroule pendant l'opération d'usinage et qui est superposé au mouvement de décalage et dirigé en sens contraire de celui-ci et l'outil à laser (3) comporte une optique focalisatrice destinée à produire un rayon laser (4) à angle fixe.

14. Dispositif selon la revendication 13, **caractérisé en ce que** le manipulateur (5) comporte une main de manipulateur (8) à plusieurs axes dans laquelle au moins un axe de main peut être commandé indépendamment du mouvement de dècalage.

15. Dispositif selon la revendication 13 ou 14, **caractérisé en ce que** l'outil à laser (3) est monté sur la main de manipulateur (8) au moyen d'un bras (5) qui forme une distance.

16. Dispositif selon la revendication 13, 14 ou 15, **caractérisé en ce que**.l'outil à laser (3) a une distance focale fixe.

17. Dispositif selon l'une des revendications precedents 13 à 16, **caractérisé en ce que** l'outil à laser (3) a une distance focale d'environ 150 à 400 mm.

18. Dispositif selon la revendication 13, **caractérisé en ce que** l'outil à laser (3) a un dispositif de balayage (17) mobile et règlable.

19. Dispositif selon l'une des revendications précédentes 13 à 18, **caractérisé en ce que** le manipulateur (2) est conçu sous forme de robot à bras articulé à au moins six axes.

20. Dispositif selon l'une des revendications précédentes 13 à 19, **caractérisé en ce que** l'outil à laser (2) est conçu sous forme d'outil à souder.
